# EUROPÄISCHE PATENTANMELDUNG

(11) **EP 4 604 390 A1**
(43) Veröffentlichungstag der Anmeldung: **20.08.2025**
(21) Anmeldenummer: 24158460.6
(22) Anmeldetag: 19.02.2024
(51) Int. Cl.: H02S 30/00, H02S 20/23, F24S 25/00

(54) **DICHTPROFIL ZUM ABDICHTEN EINES ÜBERLAPPUNGSBEREICHES ZWEIER DACHHAUT-PHOTOVOLTAIK-MODULE UND DACHHAUTANORDNUNG UMFASSEND MEHRERE DACHHAUT-PHOTOVOLTAIK-MODULE MIT DEM DICHTPROFIL**

(71) Anmelder: ENdorado GmbH, 4742 Pram (AT)
(72) Erfinder: Rabengruber, Alexander, 4680 Haag am Hausruck (AT); Rabengruber, Friedrich, 4680 Haag am Hausruck (AT)
(74) Vertreter: Weickmann & Weickmann PartmbB

(57) **Zusammenfassung**

Dichtprofil (1) zum Abdichten eines Überlappungsbereiches zweier Dachhaut-Photovoltaik-Module (2, 3), in welchem ein unterer Randbereich (4) eines oberen Dachhaut-Photovoltaik-Moduls (2) einen oberen Randbereich (5) eines unteren Dachhaut-Photovoltaik-Moduls (3) schuppenartig überlappt, wobei das Dichtprofil (1) aus wenigstens einem elastischen Gummi hergestellt ist, und wobei das Dichtprofil (1) einen ersten Dichtschenkel (6) zum Anordnen zwischen dem unteren (4) und dem oberen (5) Randbereich, einen zweiten Dichtschenkel (9) zum Anordnen unterhalb des oberen Randbereichs (5) und einen Verbindungssteg (11), der den ersten Dichtschenkel (6) mit dem zweiten Dichtschenkel (9) verbindet, umfasst.

## Beschreibung

### I. Anwendungsgebiet

Die vorliegende Erfindung betrifft ein Dichtprofil zum Abdichten eines Überlappungsbereiches zweier Dachhaut-Photovoltaik-Module eines geneigten Daches, in welchem ein unterer Randbereich eines oberen Dachhaut-Photovoltaik-Moduls einen oberen Randbereich eines unteren Dachhaut-Photovoltaik-Moduls schuppenartig überlappt. Die Erfindung betrifft des Weiteren eine Dachhautanordnung umfassend wenigstens ein oberes Dachhaut-Photovoltaik-Modul und wenigstens ein unteres Dachhaut-Photovoltaik-Modul, zwischen denen das Dichtprofil angeordnet ist.

### II. Technischer Hintergrund

Es ist bekannt, die Dachhaut geneigter Dächer wie beispielsweise Satteldächer aus Dachhaut-Photovoltaik-Modulen herzustellen, um aus natürlichem Sonnenlicht elektrischen Strom zu gewinnen. Dabei ersetzen die Dachhaut-Photovoltaik-Module herkömmliche Dachziegel hinsichtlich ihrer Funktion, die Dachhaut zu bilden. Wie bei den herkömmlichen Dachziegeln überlappen Dachhaut-Photovoltaik-Module, die in einer oberen Reihe auf dem geneigten Dach angeordnet sind, jeweils untere Dachhaut-Photovoltaik-Module, die in einer unteren Reihe auf dem geneigten Dach angeordnet sind und unmittelbar an die obere Reihe angrenzen, in einem Überlappungsbereich.

Dementsprechend wird vorliegend der Begriff "oberes Dachhaut-Photovoltaik-Modul" für ein Dachhaut-Photovoltaik-Modul verwendet, das weiter oben auf dem geneigten Dach angeordnet ist als ein "unteres Dachhaut-Photovoltaik-Modul", das sich weiter unten auf dem geneigten Dach unmittelbar an das obere Dachhaut-Photovoltaik-Modul angrenzend befindet.

In bekannter Weise werden die Dachhaut-Photovoltaik-Module mit Hilfe von Aluminium-Profilen auf dem Dach befestigt. Dabei sind die Aluminium-Profile derart gestaltet, dass sie eine Vielzahl einzelner Dichtprofile zum Abdichten des Überlappungsbereichs aufnehmen können. Bei der Montage müssen diese einzelnen Dichtprofile in Aufnahmenuten an den Aluminium-Profilen eingebracht werden, bevor die Dachhaut-Photovoltaik-Module an den Aluminium-Profilen montiert werden können. Das Einbringen der Dichtprofile in die Aufnahmenuten der Aluminium-Profile erfordert zusätzlichen Arbeitsaufwand.

### III. Darstellung der Erfindung

### a) Technische Aufgabe

Es ist daher die Aufgabe der vorliegenden Erfindung, ein Dichtprofil zum Abdichten eines Überlappungsbereiches zweier Dachhaut-Photovoltaik-Module bzw. eine Dachhautanordnung umfassend wenigstens ein oberes Dachhaut-Photovoltaik-Modul und wenigstens ein unteres Dachhaut-Photovoltaik-Modul mit dem Dichtprofil zu schaffen, das bzw. die einerseits den Montageaufwand möglichst geringhält und andererseits den Überlappungsbereich der beiden Dachhaut-Photovoltaik-Module möglichst gut abdichtet.

### b) Lösung der Aufgabe

Diese Aufgabe wird mittels eines Dichtprofils mit den Merkmalen des Anspruchs 1 und mittels einer Dachhautanordnung mit den Merkmalen des Anspruchs 14 gelöst. Weitere Ausgestaltungen der vorliegenden Erfindung ergeben sich aus den Unteransprüchen.

Erfindungsgemäß wird ein Dichtprofil zum Abdichten eines Überlappungsbereiches zweier Dachhaut-Photovoltaik-Module vorgeschlagen, wobei in dem Überlappungsbereich ein unterer Randbereich eines oberen Dachhaut-Photovoltaik-Moduls einen oberen Randbereich eines unteren Dachhaut-Photovoltaik-Moduls schuppenartig überlappt. Das erfindungsgemäße Dichtprofil ist vollständig aus wenigstens einem elastischen Gummi hergestellt.

Erfindungsgemäß weist das Dichtprofil einen ersten Dichtschenkel zum Anordnen zwischen dem unteren Randbereich des oberen Dachhaut-Photovoltaik-Moduls und dem oberen Randbereich des unteren Dachhaut-Photovoltaik-Moduls auf. Des Weiteren ist es mit einem zweiten Dichtschenkel zum Anordnen unterhalb des oberen Randbereichs des unteren Dachhaut-Photovoltaik-Moduls versehen. Das Dichtprofil umfasst außerdem einen Verbindungssteg, der den ersten Dichtschenkel mit dem zweiten Dichtschenkel verbindet.

Da das Dichtprofil vollständig aus dem wenigstens einen elastischen Gummi hergestellt ist, sind der erste Dichtschenkel, der zweite Dichtschenkel und der Verbindungssteg elastisch verformbar. Es ist lediglich ein einziges Bauteil in Form des erfindungsgemäßen Dichtprofils erforderlich, um die Dichtaufgaben in dem Überlappungsbereich eines oberen und eines unteren Dachhaut-Photovoltaik-Moduls zu erfüllen. Der erste Dichtschenkel dichtet den Spalt zwischen dem unteren Randbereich des oberen Dachhaut-Photovoltaik-Moduls und dem oberen Randbereich des unteren Dachhaut-Photovoltaik-Moduls ab. Der zweite Dichtschenkel sorgt für eine Abdichtung zwischen der Unterseite des oberen Randbereichs des unteren Dachhaut-Photovoltaik-Moduls und einer Unterkonstruktion der Dachhautanordnung, auf welchem der obere Randbereich des unteren Dachhaut-Photovoltaik-Moduls aufliegt.

Ein Vorteil des erfindungsgemäßen Dichtprofils besteht somit darin, dass es allein, d.h. ohne Verwendung weiterer Dichtelemente, die beiden vorgenannten Dichtaufgaben in dem Überlappungsbereich erfüllen kann. Dabei umgreifen der erste Dichtschenkel, der Verbindungssteg und der zweite Dichtschenkel den oberen Randbereich des unteren Dachhaut-Photovoltaik-Moduls. Die Elastizität des Dichtprofils ermöglicht ein einfaches Aufstecken des Dichtprofils auf diesen oberen Randbereich. Die Montage des erfindungsgemäßen Dichtprofils erfordert lediglich einen einzigen Arbeitsschritt, nämlich das vorgenannte Aufstecken des Dichtprofils auf den oberen Randbereich des unteren Dachhaut-Photovoltaik-Moduls. Der Montageaufwand ist dementsprechend gering.

Grundsätzlich denkbar wäre es, das erfindungsgemäße Dichtprofil aus unterschiedlichen elastischen Gummis herzustellen. Die Verbindung der einzelnen Bestandteile des Dichtprofils könnte in diesem Fall beispielsweise durch Vulkanisieren erfolgen. Vorteilhaft ist es, das erfindungsgemäße Dichtprofil aus einem einzigen elastischen Gummi herzustellen. Dies minimiert den Herstellungsaufwand des Dichtprofils.

Vorzugsweise weist das Dichtprofil einen Auffangkanal zum Auffangen von Kondenswasser auf, das sich an einer Unterseite des oberen Dachhaut-Photovoltaik-Moduls vor allem nachts niederschlagen und wegen der Dachneigung zu dessen unterem Randbereich laufen kann. Auch der Auffangkanal ist aus dem wenigstens einen elastischen Gummi hergestellt. Der Auffangkanal ist an den beiden stirnseitigen Enden des leistenartigen Dichtprofils geschlossen ausgebildet. Das aufgefangene Kondenswasser kann somit nicht in die Unterkonstruktion oder darunterliegende Schichten des Dachaufbaus gelangen. Die Wärmeentwicklung der tagsüber von Sonne bestrahlten Dachhaut-Photovoltaik-Module sorgt dafür, dass das aufgefangene Kondenswasser während des Tages verdunstet und sich dadurch verflüchtigt. Eine Durchnässung des Dachaufbaus durch Kondenswasser wird auf diese Weise vermieden.

Der erste Dichtschenkel an sich bewirkt bereits eine Dichtwirkung zwischen der Unterseite des unteren Randbereichs und der Oberseite des oberen Randbereichs. Vorteilhaft ist es, an dem ersten Dichtschenkel wenigstens eine erste Dichtlippe anzuordnen, die in einem in den Überlappungsbereich eingebautem Zustand des Dichtprofils in Richtung des unteren Randbereichs des oberen Dachhaut-Photovoltaik-Moduls hervorsteht und Kontakt mit einer Oberfläche an der Unterseite des unteren Randbereichs hat. Dadurch wird die Dichtwirkung weiter verbessert.

Die Dichtwirkung kann noch weiter verbessert werden, indem an dem ersten Dichtschenkel wenigstens eine zweite Dichtlippe angeordnet wird, die in einem in den Überlappungsbereich eingebautem Zustand des Dichtprofils in Richtung des oberen Randbereichs des unteren Dachhaut-Photovoltaik-Moduls hervorsteht und Kontakt mit einer Oberfläche an der Oberseite des oberen Randbereichs hat.

Auch der zweite Dichtschenkel an sich bewirkt bereits eine Dichtwirkung, wenn er in Kontakt mit der Unterseite des oberen Randbereichs des unteren Dachhaut-Photovoltaik-Moduls und einer Oberseite einer Dach-Unterkonstruktion steht. In vorteilhafter Weise kann diese Dichtwirkung verbessert werden, indem an dem zweiten Dichtschenkel wenigstens eine dritte Dichtlippe angeordnet wird, die in einem in den Überlappungsbereich eingebautem Zustand des Dichtprofils in Richtung der Unterseite des oberen Randbereichs des unteren Dachhaut-Photovoltaik-Moduls hervorsteht und an dieser anliegt.

Vorzugsweise weist der erste Dichtschenkel zwei oder mehr erste Dichtlippen und/oder zwei oder mehr zweite Dichtlippen auf. Dadurch kann eine Art Labyrinthdichtung ausgebildet werden, welche die Dichtwirkung noch weiter verbessert.

Vorzugsweise erstrecken sich dabei die ersten Dichtlippen und/oder die zweiten Dichtlippen im Querschnitt betrachtet relativ zu einer Längsebene des ersten Dichtschenkels und in einer von dem Verbindungssteg abgewandten Richtung geneigt. Die ersten und/oder zweiten Dichtlippen ragen somit einer potenziellen Eindringrichtung, in welcher z. B. Wasser bei Schlagregen eindringen könnte, entgegen.

In vorteilhafter Weise können die ersten Dichtlippen und die zweiten Dichtlippen im Querschnitt relativ zu einer Längsebene des ersten Dichtschenkels symmetrisch angeordnet sein. Dies ist vorteilhaft, da auf diese Weise der Anpressdruck der ersten Dichtlippen bzw. der zweiten Dichtlippen an die Unterseite des unteren Randbereichs des oberen Dachhaut-Photovoltaik-Moduls bzw. an die Oberseite des oberen Randbereichs des unteren Dachhaut-Photovoltaik-Moduls größer ist als in dem erfindungsgemäß ebenso denkbaren Fall, in welchem die ersten Dichtlippen und die zweiten Dichtlippen in der Richtung der Längsebene des ersten Dichtschenkels mit einem Versatz relativ zueinander angeordnet sind. Der erhöhte Anpressdruck verbessert die Dichtwirkung noch weiter.

Vorzugsweise kann der zweite Dichtschenkel zwei oder mehr dritte Dichtlippen aufweisen. Dabei können die dritten Dichtlippen im Querschnitt als Dichtzähne mit jeweils einer Zahnlängsachse ausgebildet sein, die rechtwinklig auf dem zweiten Dichtschenkel bzw. seiner Längsebene steht.

In vorteilhafter Weise kann der Verbindungssteg als Anschlag für eine obere Stirnseite des unteren Dachhaut-Photovoltaik-Moduls ausgebildet sein. Dies vereinfacht die Montage des Dichtprofils an dem oberen Randbereich des unteren Dachhaut-Photovoltaik-Moduls, da das Dichtprofil einfach bis zum Anschlag an den Verbindungssteg auf den oberen Randbereich aufgesteckt werden kann.

Vorzugsweise weist der zweite Dichtschenkel im Querschnitt eine zweite Länge auf, die größer ist als eine erste Länge, die der erste Dichtschenkel im Querschnitt aufweist. Dies ist im Hinblick auf die Einbausituation des Dichtprofils in zweierlei Hinsicht vorteilhaft.

Zum einen kann das von dem Verbindungssteg abgewandte Ende des ersten Dichtschenkels einen ausreichenden Abstand von einer Unterkante des oberen Dachhaut-Photovoltaik-Moduls einhalten, um welchen der untere Randbereich des oberen Dachhaut-Photovoltaik-Moduls nach unten über das vorgenannte Ende des ersten Dichtschenkels hinausragt bzw. übersteht. Dieser Abstand bzw. Überstand wird dann als ausreichend groß bemessen aufgefasst, wenn überwiegend verhindert wird, dass Regenwasser, welches in dem Überlappungsbereich zwischen dem oberen Dachhaut-Photovoltaik-Modul und dem unteren Dachhaut-Photovoltaik-Modul durch Wind oder Adhäsionskräfte in Richtung des ersten Dichtschenkels gedrückt wird, mit dessen vorgenanntem Ende nicht in Kontakt kommt. Bei entsprechender Auslegung des Abstands bzw. des Überstands kommt die Dichtfunktion des ersten Dichtschenkels daher nur in weniger häufigen Ausnahmefällen zum Einsatz. Eine eher kleinere Länge des ersten Dichtschenkels vermeidet in diesem Zusammenhang die Notwendigkeit, die Breite des Überlappungsbereichs unnötig groß zu gestalten.

Zum anderen ermöglicht es eine eher größere Länge des zweiten Dichtschenkels, mit zunehmender Breite eines Elements einer Dach-Unterkonstruktion, auf welchem das Dichtprofil mit seinem zweiten Dichtschenkel zur Auflage kommt, die Dichtwirkung des zweiten Dichtschenkels zu verbessern. Bei verhältnismäßig geringer Breite des Elements der Dach-Unterkonstruktion steht ein von dem Verbindungssteg abgewandter Endabschnitt des zweiten Dichtschenkels nach unten über das vorgenannte Element hervor. Dieser Endabschnitt wird daher nicht gegen eine Unterseite des oberen Randbereichs des unteren Dachhaut-Photovoltaik-Modul gedrückt und dichtet deshalb nicht gut ab. Mit zunehmender Breite des Elements der Dach-Unterkonstruktion wird der überstehende Endabschnitt immer kleiner und die insgesamt aktive Dichtlänge, über welche hinweg der zweite Dichtschenkel gegen die vorgenannte Unterseite des oberen Randbereichs gedrückt wird, immer größer. Dadurch entfaltet der zweite Dichtschenkel eine gesteigerte Dichtwirkung.

Alle zwingenden und alle optionalen Bestandteile des erfindungsgemäßen Dichtprofils, d.h. der erste Dichtschenkel, der zweite Dichtschenkel, der Verbindungssteg, die erste Dichtlippe oder die ersten Dichtlippen, die zweite Dichtlippe oder die zweiten Dichtlippen, die dritte Dichtlippe oder die dritten Dichtlippen und die Begrenzungswandungen des Auffangkanals zum Auffangen von Kondenswasser, sind jeweils vollständig aus dem wenigstens einen elastischen Gummi hergestellt. Besonders vorteilhaft ist es, das Dichtprofil mit den vorgenannten zwingenden und optionalen Bestandteilen einstückig aus einem einzigen elastischen Gummi herzustellen.

Die vorliegende Erfindung schlägt außerdem eine Dachhautanordnung vor, die zur Anordnung auf einem geneigten Dach, beispielsweise einem Sattel- oder einem Pultdach, vorgesehen ist. Die Dachhautanordnung umfasst wenigstens ein oberes Dachhaut-Photovoltaik-Modul und wenigstens ein unteres Dachhaut-Photovoltaik-Modul, wobei das obere Dachhaut-Photovoltaik-Modul zur Anordnung weiter oben auf dem geneigten Dach vorgesehen ist als das untere Dachhaut-Photovoltaik-Modul. Die beiden Dachhaut-Photovoltaik-Module weisen einen Überlappungsbereich auf, in welchem ein unterer Randbereich des oberen Dachhaut-Photovoltaik-Moduls einen oberen Randbereich des unteren Dachhaut-Photovoltaik-Moduls schuppenartig überlappt. Dementsprechend überdeckt der untere Randbereich den oberen Randbereich und schirmt ihn vor direkten Wettereinwirkungen ab.

Jedes der beiden Dachhaut-Photovoltaik-Module weist einen linken und einen rechten Seitenrandbereich auf, die bei auf einem geneigten Dach montierter Dachhautanordnung relativ zu einer Horizontalebene entsprechend der Dachneigung geneigt verlaufen. Diese Seitenrandbereiche begrenzen das jeweilige Dachhaut-Photovoltaik-Modul in einer Aufsicht auf das Dach nach links bzw. nach rechts.

Bei der erfindungsgemäßen Dachhautanordnung ist in dem Überlappungsbereich ein Dichtprofil mit den Merkmalen der vorliegenden Erfindung derart angeordnet, dass das Dichtprofil so auf den oberen Randbereich des unteren Dachhaut-Photovoltaik-Moduls aufgesteckt ist, dass zumindest ein Teil des oberen Randbereichs zwischen dem ersten Dichtschenkel und dem zweiten Dichtschenkel aufgenommen ist, zumindest ein Teil des unteren Randbereichs des oberen Dachhaut-Photovoltaik-Moduls lose auf dem ersten Dichtschenkel aufliegt und zumindest ein Teil des zweiten Dichtschenkels lose auf einer Dach-Unterkonstruktion aufliegt. Dabei sind die beiden Dachhaut-Photovoltaik-Module ausschließlich entlang ihrer linken und rechten Seitenrandbereiche formschlüssig an der Dach-Unterkonstruktion befestigt bzw. gehalten.

Ein Vorteil der erfindungsgemäßen Dachhautanordnung besteht darin, dass der Überlappungsbereich konstruktiv einfach gestaltet und gleichzeitig gut abdichtend ausgebildet ist. Ein aufwendiges Einbringen einzelner Dichtprofile in Aufnahmenuten an starren Aluminium-Profilen, die sich in den Raum zwischen dem unteren Randbereich des oberen Dachhaut-Photovoltaik-Moduls und dem oberen Randbereich des unteren Dachhaut-Photovoltaik-Moduls hinein erstrecken, erübrigt sich. Auch die Montage von Formschlusselementen, welche den unteren Randbereich des oberen Dachhaut-Photovoltaik-Moduls formschlüssig halten, ist nicht erforderlich.

### c) Ausführungsbeispiel

Nachfolgend wird ein Ausführungsbeispiel der vorliegenden Erfindung beispielhaft anhand der beigefügten Zeichnungen beschrieben. Es zeigen:
- Fig. 1:: einen Querschnitt eines Ausführungsbeispiels eines leistenartigen Dichtprofils gemäß der vorliegenden Erfindung, wobei es in einer Einbaulage entsprechend einer beispielhaften Dachneigung dargestellt ist, die von links oben nach rechts unten abfällt;
- Fig. 2:: eine Aufsicht auf einen Teilbereich eines Ausführungsbeispiels einer geneigten und unvollständigen Dachhautanordnung gemäß der vorliegenden Erfindung, wobei die Blickrichtung der Teilaufsicht senkrecht auf der geneigten Ebene der Dachhautanordnung steht und die Unvollständigkeit darin besteht, dass die zwei oberen Dachhaut-Photo-voltaik-Module von insgesamt vier Dachhaut-Photovoltaik-Modulen nicht dargestellt sind;
- Fig. 3:: eine Schnittansicht gemäß Schnitt C-C in Fig. 2;
- Fig. 4:: eine Schnittansicht gemäß Schnitt A-A in Fig. 2, die entsprechend der Blickrichtung und Dachneigung schräg dargestellt ist;
- Fig. 5:: eine Schnittansicht gemäß Schnitt B-B in Fig. 2, die entsprechend der Blickrichtung und Dachneigung schräg dargestellt ist;
- Fig. 6:: eine Aufsicht ähnlich Fig. 2, wobei die zwei in Fig. 2 weggelassenen, oberen Dachhaut-Photovoltaik-Module gezeigt sind;
- Fig. 7:: eine Schnittansicht gemäß Schnitt D-D in Fig. 6, die entsprechend der Blickrichtung und Dachneigung schräg dargestellt ist;
- Fig. 8:: eine Schnittansicht gemäß Schnitt E-E in Fig. 6, die entsprechend der Blickrichtung und Dachneigung schräg dargestellt ist;
- Fig. 9:: eine Aufsicht ähnlich Fig. 6, wobei zusätzlich eine Montageschiene zum Halten der zwei oberen Dachhaut-Photovoltaik-Module dargestellt ist;
- Fig. 10:: eine Schnittansicht gemäß Schnitt F-F in Fig. 9, die entsprechend der Blickrichtung und Dachneigung schräg dargestellt ist; und
- Fig. 11:: eine Schnittansicht gemäß Schnitt G-G in Fig. 9, die entsprechend der Blickrichtung und Dachneigung schräg dargestellt ist.

In den Zeichnungen kennzeichnen gleiche Bezugszeichen gleiche Teile bzw. Elemente oder verschiedene Teile bzw. Elemente, welche die gleiche Funktion ausüben.

Ein Dachhaut-Photovoltaik-Modul im Sinne der vorliegenden Erfindung ist ein Photovoltaik-Modul, welches die eigentliche Dachhaut eines Gebäudes bildet, die das Gebäude nach oben vor Umwelteinflüssen schützt. Ein Dachhaut-Photovoltaik-Modul ist demnach von einem solchen Photovoltaik-Modul zu unterscheiden, welches auf einer bereits vorhandenen und bestehenbleibenden Dachhaut eines Gebäudes montiert wird. Nachfolgend wird der Begriff "Dachhaut-Photovoltaik-Modul" abgekürzt in der Form "PV-Modul" verwendet.

Die PV-Module erzeugen in bekannter Weise aus natürlichem Sonnenlicht elektrischen Strom zur Versorgung der unter der Dachhaut vorhandenen Stromverbraucher und/oder zur Einspeisung in das öffentliche Stromnetz.

Zum Ausbilden einer geneigten Dachhaut werden die PV-Module schuppenartig überlappend angeordnet, wie es an sich und bereits bei herkömmlichen Dachziegeln bekannt ist. In dem Bereich des Übergangs von einem oberen PV-Modul zu einem unteren PV-Modul der Dachhaut entsteht dadurch ein Überlappungsbereich, der hinreichend gegen Umwelteinflüsse wie beispielsweise Schlagregen oder auftauendes Eis auf dem Dach abgedichtet werden muss.

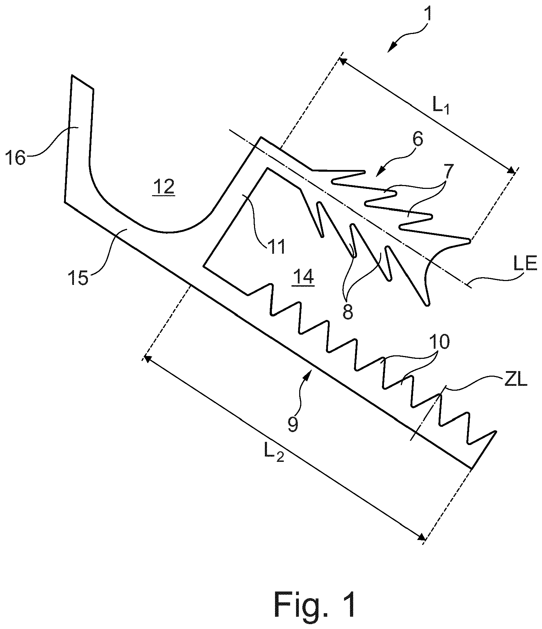

In Fig. 1 ist der Querschnitt eines Ausführungsbeispiels eines länglichen Dichtprofils 1 gezeigt, das zum Abdichten des Überlappungsbereiches zweier PV-Module dient. Das dargestellte Dichtprofil 1 besteht vollständig aus einem elastischen Gummi, beispielsweise einem Ethylen-Propylen-Dien-Kautschuk (abgekürzt EPDM), bei dem es sich um einen bekannten Synthesekautschuk handelt.

Das Dichtprofil 1 gemäß Ausführungsbeispiel weist einen ersten Dichtschenkel 6 mit einer Länge L₁ und einen zweiten Dichtschenkel 9 mit eine Länge L₂ auf. Die Dichtschenkel 6 und 9 erstrecken sich parallel zueinander und die Länge L₁ des Dichtschenkels 6 ist kleiner als die Länge L₂ des Dichtschenkels 9. Die Dichtschenkel 6 und 9 sind über einen Verbindungssteg 11 miteinander verbunden. Der Dichtschenkel 6, der Verbindungssteg 11 und der Dichtschenkel 9 begrenzen einen in Fig. 1 nach rechts unten offenen Hohlraum 14, in welchen ein oberer Randbereich eines unteren PV-Moduls eingebracht werden kann.

Wie in Fig. 1 zu sehen ist, weist der erste Dichtschenkel 6 bei dem gezeigten Ausführungsbeispiel insgesamt vier erste Dichtlippen 7 auf, die von dem Hohlraum 14 abgewandt sind und relativ zu einer Längsebene LE des Dichtschenkels 6 geneigt verlaufen. Die Richtung der Neigung der Dichtlippen 7 ist derart gewählt, dass sie von dem Verbindungssteg 11 wegweist.

Auf der dem Hohlraum 14 zugewandten Seite des Dichtschenkels 6 sind bei dem gezeigten Ausführungsbeispiel insgesamt vier zweite Dichtlippen 8 angeordnet, die ebenso zu der Längsebene LE des Dichtschenkels 6 geneigt verlaufen und von dem Verbindungssteg 11 wegweisen.

Bei dem Dichtprofil 1 gemäß Ausführungsbeispiel sind die Neigungswinkel der ersten Dichtlippen 7 und der zweiten Dichtlippen 8 relativ zu der Längsebene LE betragsmäßig gleich groß. Darüber hinaus sind die ersten Dichtlippen 7 und die zweiten Dichtlippen 8 relativ zu der Längsebene LE symmetrisch angeordnet, so dass im Querschnitt der Fig. 1 eine tannenbaumartige Geometrie des Dichtschenkels 6 entsteht.

Die Anzahl der ersten Dichtlippen 7 und/oder die Anzahl der zweiten Dichtlippen 8 kann bei Bedarf von der in Fig. 1 jeweils gezeigten Anzahl abweichen. Denkbar ist auch, eine unterschiedliche Anzahl von ersten Dichtlippen 7 und zweiten Dichtlippen 8 vorzusehen. Des Weiteren ist denkbar, die ersten Dichtlippen 7 und die zweiten Dichtlippen 8 nicht symmetrisch zu der Längsebene LE anzuordnen, sondern relativ zueinander versetzt. Auch unterschiedliche Neigungswinkel der ersten Dichtlippen 7 relativ zu der Längsebene LE einerseits und der zweiten Dichtlippen 8 relativ zu der Längsebene LE andererseits sind bei Bedarf denkbar.

Der zweite Dichtschenkel 9 weist bei dem gezeigten Ausführungsbeispiel insgesamt achteinhalb dritte Dichtlippen 10 auf, die im Querschnitt des Dichtschenkels 9 als Dichtzähne ausgebildet sind. Die in Fig. 1 beispielhaft gekennzeichnete Zahnlängsachse ZL jeder zahnförmigen Dichtlippe 10 verläuft bei dem gezeigten Ausführungsbeispiel rechtwinklig zu dem zweiten Dichtschenkel 9. Die Anzahl der dritten Dichtschenkel 10 kann nach Bedarf variieren und von der in Fig. 1 gezeigten Anzahl abweichen. Denkbar ist auch, die dritten Dichtlippen 10 nicht wie bei dem gezeigten Ausführungsbeispiel als Dichtzähne auszubilden, sondern stattdessen in der Art der Dichtlippen 7 an dem ersten Dichtschenkel 6, d.h. von dem Verbindungssteg 11 weg geneigt.

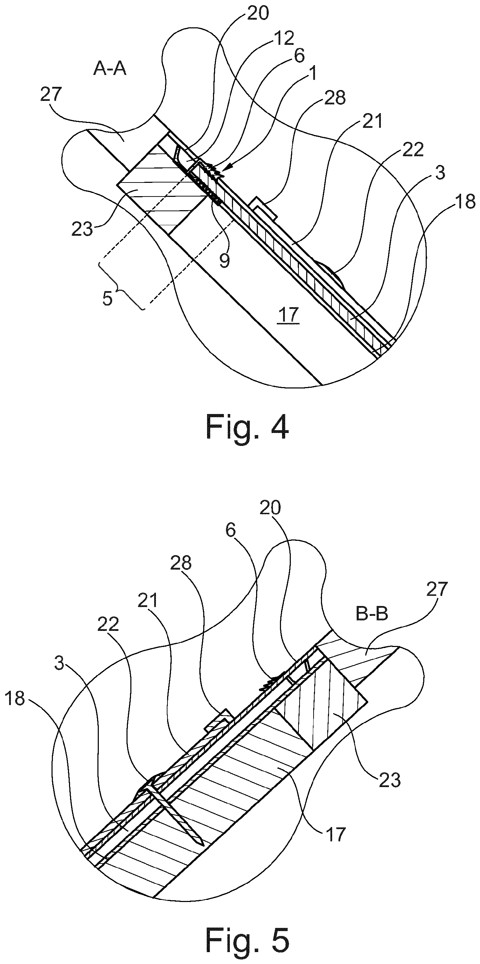

Das Dichtprofil 1 wird auf einen oberen Randbereich eines unteren PV-Moduls derart aufgesteckt, dass sein oberer Randbereich in dem Hohlraum 14 des Dichtprofils 1 zu liegen kommt und eine obere Stirnseite dieses Randbereichs in Fig. 1 von rechts unten an den Verbindungssteg 11 anschlägt (vgl. Fig. 4, 7 und 10). Der Verbindungssteg 11 dient somit als Anschlag für die obere Stirnseite des unteren PV-Moduls.

Abweichend von Fig. 1 kann der Querschnitt des Verbindungsstegs 11 alternativ gekrümmt oder abgewinkelt ausgebildet sein. Insbesondere wenn der Verbindungssteg 11 als Anschlag für die obere Stirnseite des unteren PV-Moduls dienen soll und diese Stirnseite keine ebene Oberfläche aufweist, kann die Geometrie des Querschnitts des Verbindungsstegs 11 an die Geometrie der Oberfläche der oberen Stirnseite des unteren PV-Moduls angepasst ausgestaltet werden, so dass die Stirnseite satt an dem Verbindungssteg 11 anliegen kann.

Wie in Fig. 1 zu sehen ist, befindet sich auf der von dem Hohlraum 14 abgewandten Seite des Verbindungsstegs 11 ein Auffangkanal 12 zum Auffangen von Kondenswasser, der sich ebenso wie die Dichtschenkel 6, 9 und der Verbindungssteg 11 in Blickrichtung der Fig. 1 über die gesamte Länge des Dichtprofils 1 erstreckt.

Dieser Auffangkanal 12 ist an seinen beiden Enden, von denen eines vor der Zeichenebene der Fig. 1 und das andere hinter der Zeichenebene der Fig. 1 liegt, mit nicht gezeigten Stirnwänden verschlossen. Er dient zum Auffangen, aber nicht zum Ableiten von Kondenswasser, das sich an der Unterseite eines oberen PV-Moduls bilden und an dessen unterem Randbereich in den Auffangkanal 12 abtropfen kann, wenn die PV-Module noch kalt sind. Das in dem Auffangkanal aufgefangene Kondenswasser verdunstet bei Erwärmung insbesondere des oberen PV-Moduls, von welchem es abgetropft ist, wieder, so dass der Auffangkanal 12 durch Verdunstung des in ihm befindlichen Kondenswassers wieder entleert wird. Der Auffangkanal 12 verhindert somit die Beaufschlagung der Unterkonstruktion der Dachhaut mit Kondenswasser.

Wie im Querschnitt gemäß Fig. 1 zu sehen ist, wird der Auffangkanal 12 bei dem gezeigten Ausführungsbeispiel von insgesamt drei Kanalwänden begrenzt, nämlich von dem Verbindungssteg 11, einer Kanalbodenwand 15, die sich in Fig. 1 in geradliniger Verlängerung des zweiten Dichtschenkels 9 erstreckt, und einer Kanalseitenwand 16.

Da das Dichtprofil 1 vollständig aus elastischem Gummi hergestellt ist, kann es insbesondere während des Vorgangs des Aufsteckens auf einen oberen Randbereich eines unteren PV-Moduls sowohl im Querschnitt als auch in seiner Längsrichtung nach Belieben verformt werden, um den oberen Randbereich in den Hohlraum 14 einzubringen. Beispielsweise kann der erste Dichtschenkel 6 samt seiner Dichtlippen 7 und 8 in Fig. 1 elastisch nach oben gebogen werden, um das Einbringen des oberen Randbereichs in den Hohlraum 14 zu erleichtern.

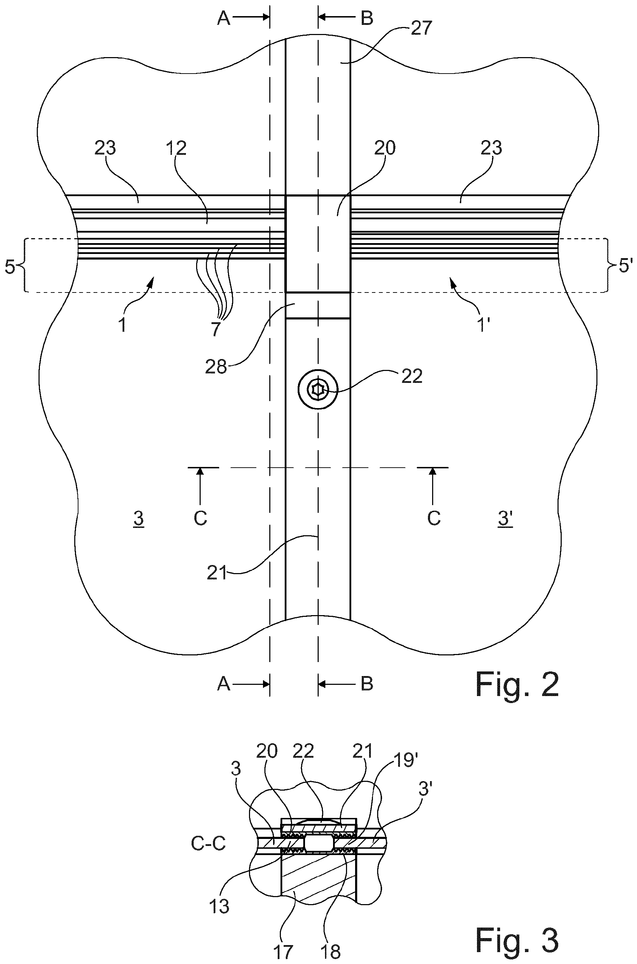

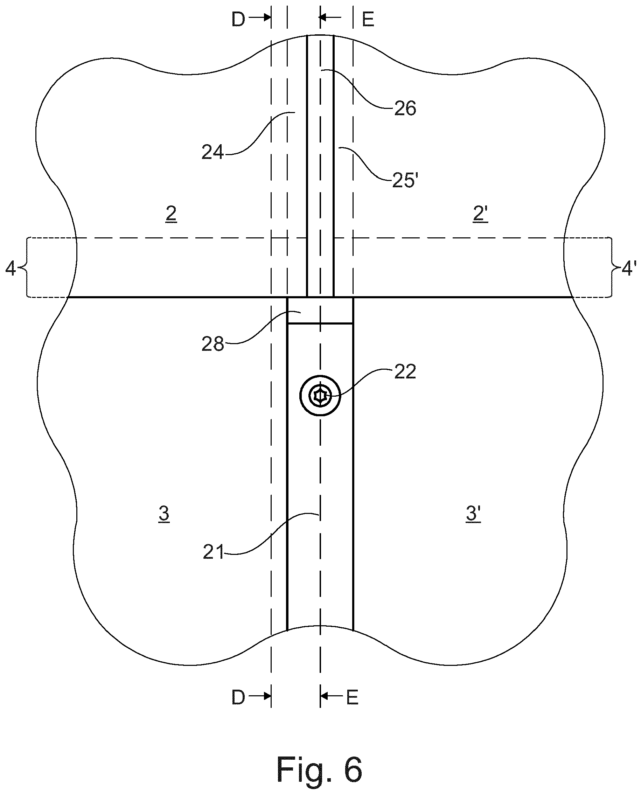

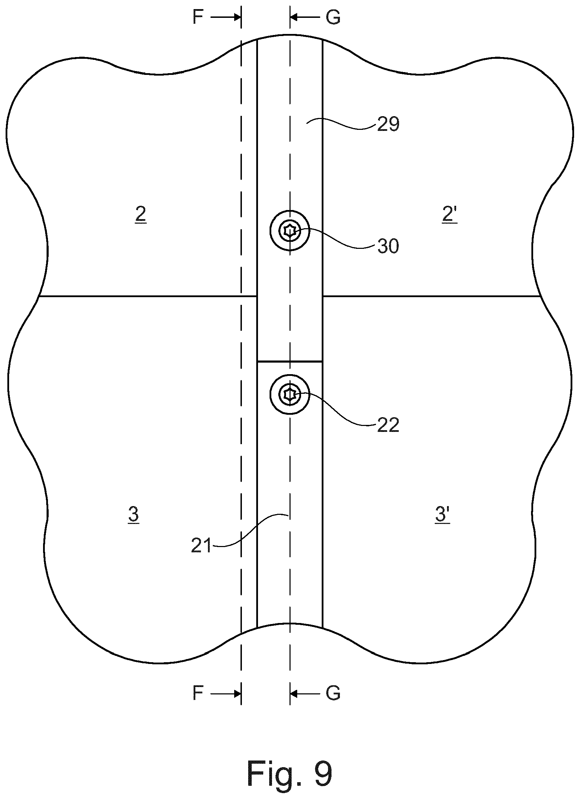

Fig. 2 zeigt eine Aufsicht auf einen Teilbereich eines Ausführungsbeispiels der erfindungsgemäßen Dachhautanordnung, wobei der gezeigte Teilbereich unvollständig ist, da nur die Eckbereiche zweier unterer PV-Module 3, 3' dargestellt sind und zugehörige obere PV-Module 2, 2', die in den Fig. 6 und 9 dargestellt sind, zur besseren Erläuterung des Ausführungsbeispiels weggelassen wurden.

In Fig. 2 ist links unten der Eckbereich eines unteren PV-Moduls 3 und rechts unten der Eckbereich eines weiteren unteren PV-Moduls 3' zu sehen. Da die erfindungsgemäße Dachhautanordnung auf einem geneigten Dach, beispielsweise einem Satteldach oder einem Pultdach, zur Anwendung kommt, gelangt man auf der Dachschräge des Daches immer weiter nach oben, wenn man in der Zeichenebene der Fig. 2 eine Horizontallinie von unten nach oben bewegt.

Entsprechend dem in Fig. 3 gezeigten Schnitt C-C aus Fig. 2 liegen die beiden unteren PV-Module 3 und 3' nebeneinander und überlappen einander nicht. In Fig. 3 ist ein Element 17 einer Unterkonstruktion zum Abstützen der Dachhautanordnung zu erkennen, auf welchem ein länglicher Auflagegummi 18 angeordnet ist. Der Auflagegummi 18 kann beispielsweise aus EPDM bestehen. Auf dem Auflagegummi 18 liegt sowohl der rechte Seitenrandbereich 13 des linken PV-Moduls 3 als auch der linke Seitenrandbereich 19' des rechten PV-Moduls 3' auf.

Auf dem rechten Seitenrandbereich 13 und dem linken Seitenrandbereich 19' befindet sich ein länglicher Schienengummi 20, der ebenso wie der Auflagegummi 18 aus EPDM bestehen kann. Eine längliche Montageschiene 21, beispielsweise aus Aluminium, wird auf den Schienengummi 20 aufgelegt und mit Hilfe von Spenglerschrauben 22 mit dem Element 17 der Unterkonstruktion verschraubt. Von den Spenglerschrauben 22 ist in Fig. 2 nur eine dargestellt.

In Fig. 2 ist ein oberer Randbereich 5 des unteren PV-Moduls 3 gekennzeichnet. Entsprechend dem in Fig. 4 dargestellten Schnitt A-A aus Fig. 2 ist auf den oberen Randbereich 5 ein erfindungsgemäßes Dichtprofil 1 gemäß Fig. 1 derart aufgesteckt, dass sich der obere Randbereich 5 teilweise in dem Hohlraum 14 des Dichtprofils 1 befindet und mit seiner in Fig. 4 nach links oben weisenden Stirnfläche an den Verbindungssteg 11 anschlägt. In der Aufsicht der Fig. 2 sind insbesondere der Auffangkanal 12 und die ersten Dichtlippen 7 des Dichtprofils 1 zu erkennen. In gleicher Weise ist auf den in Fig. 2 gekennzeichneten, oberen Randbereich 5' des unteren PV-Moduls 3' ein Dichtprofil 1' aufgesteckt, welches identisch zu dem erfindungsgemäßen Dichtprofil 1 gemäß Fig. 1 ausgebildet ist.

In Fig. 4 ist zu erkennen, dass der zweite Dichtschenkel 9 des Dichtprofils 1 an bzw. auf einem am Dach horizontal verlaufenden Element 23 der Unterkonstruktion der Dachhautanordnung teilweise an bzw. aufliegt. Der Spalt zwischen dem Element 23 und der Unterseite des oberen Randbereichs 5 des unteren PV-Moduls 3 wird somit durch den zweiten Dichtschenkel 9 abgedichtet. Die als Dichtzähne ausgebildeten Dichtlippen 10 des Dichtschenkels 9 greifen dabei an die Unterseite des oberen Randbereichs 5 an und verformen sich elastisch. Des Weiteren ist in Fig. 4 zu erkennen, dass der erste Dichtschenkel 6 mit seinen Dichtlippen 8 an der Oberseite des oberen Randbereiches 5 des unteren PV-Moduls 3 anliegt.

Wie in Fig. 4 des Weiteren zu sehen ist, steht der zweite Dichtschenkel 9 nach rechts unten mit einem von dem Verbindungssteg 11 abgewandten Endabschnitt über das Element 23 der Unterkonstruktion hervor. Abweichend von dem in Fig. 4 gezeigten Element 23 kann eine Unterkonstruktion mit einem Element zur Anwendung kommen, das eine Breite aufweist, die von der Breite (Länge der langen Rechteckseite des Querschnitts des Elements 23 in Fig. 4) des Elements 23 abweicht. Trotz kleinerer oder größerer Breiten des Elements 23 liegt das PV-Modul 3 in seinem oberen Randbereich 5 im Rahmen der Länge L₂ des Dichtschenkels 9 stets satt auf dem Element 23 auf. Der Spalt zwischen dem Element 23 und dem oberen Randbereich 5 ist stets vollständig wenigstens durch einen Teilabschnitt des Dichtschenkels 9 ausgefüllt. Je länger dieser Teilabschnitt ist, d.h. je größer die Breite des Elements 23 ist, umso mehr Dichtlippen 10 liegen aktiv an der Unterseite des oberen Randabereichs 5 an und umso besser ist die Dichtwirkung des Dichtschenkels 9.

Fig. 5 zeigt den Schnitt B-B aus Fig. 2, der genau durch den in Fig. 3 zu sehenden Zwischenraum zwischen dem linken PV-Modul 3 und dem rechten PV-Modul 3' verläuft. Das horizontal verlaufende Element 23 der Unterkonstruktion ist in dem Bereich des in Fig. 3 zu sehenden Zwischenraums zwischen dem linken PV-Modul 3 und dem rechten PV-Modul 3` nicht unterbrochen.

Die Fig. 6, 7 und 8 zeigen den Fig. 2, 4 und 5 entsprechende Ansichten. Allerdings ist zusätzlich ein oberes PV-Modul 2, dessen Eckbereich in Fig. 6 links oben zu sehen ist, und ein oberes PV-Modul 2', dessen Eckbereich in Fig. 6 rechts oben zu sehen ist, dargestellt. In den Fig. 6, 7 und 8 sind somit alle vier PV-Module 3, 3', 2, 2' zu sehen, die in dem gezeigten Teilbereich der erfindungsgemäßen Dachhautanordnung vorhanden sind.

Ein unterer Randbereich 4 des oberen PV-Moduls 2, der in Fig. 6 gekennzeichnet ist, überlappt den in Fig. 2 zu sehenden oberen Randbereich 5 des unteren PV-Moduls 3. Dadurch wird ein Überlappungsbereich gebildet, in welchem das obere PV-Modul 2 das untere PV-Modul 3 schuppenartig überlappt. In der Ansicht gemäß Fig. 6 ist der obere Randbereich 5 des unteren PV-Moduls 3 ebenso wie das in Fig. 2 zu sehende Dichtprofil 1 von dem oberen PV-Modul 2 verdeckt und daher nicht zu sehen.

In gleicher Weise überdeckt das in Fig. 6 rechts oben dargestellte, obere PV-Modul 2' das untere PV-Modul 3', so dass der obere Randbereich 5' des unteren PV-Moduls 3' unterhalb des unteren Randbereichs 4' des oberen PV-Moduls 2` liegt. Auch das Dichtprofil 1' wird in gleicher Weise wie das Dichtprofil 1 von dem oberen PV-Modul 2' verdeckt, so dass es in Fig. 6 nicht zu sehen ist.

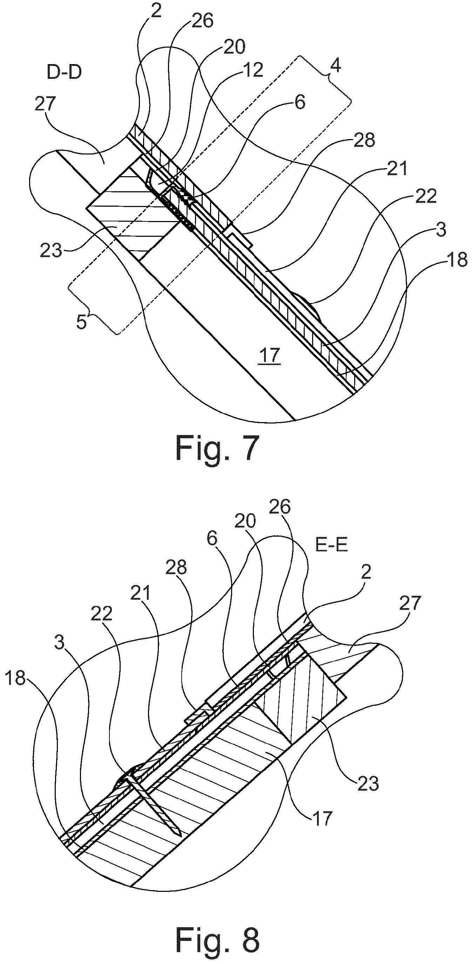

In Fig. 6 ist in Verbindung mit den in den Fig. 7 und 8 dargestellten Schnitten D-D und E-E aus Fig. 6 zu erkennen, dass ein rechter Seitenrandbereich 24 des oberen PV-Moduls 2 und ein linker Seitenrandbereich 25` des oberen PV-Moduls 2' auf einem länglichen Auflagegummi 26 aufliegen, der an bzw. auf einem Element 27 der Unterkonstruktion der Dachhautanordnung an- bzw. aufgebracht ist. Der Auflagegummi 26 kann wie der Auflagegummi 18 beispielsweise aus EPDM bestehen.

In den Fig. 6 und 7 ist außerdem zu erkennen, dass am oberen Ende der Montageschiene 21 ein im Querschnitt L-förmiges und hartes Kantenschutzprofil 28 angebracht ist, an welchem die unteren Enden der Seitenrandbereiche 24, 25' der PV-Module 2 und 2` von oben anliegen.

Wie in den Fig. 7 und 8 zu sehen ist, erstreckt sich der Auflagegummi 26 an seinem unteren Ende nach unten über das Ende des Elements 27 hinaus bis zu dem Kantenschutzprofil 28. In diesem Erstreckungsbereich zwischen dem unteren Ende des Elements 27 und dem Kantenschutzprofil 28 liegt der Auflagegummi 26 auf dem oberen Ende des Schienengummis 20 auf.

Wie in Fig. 7 zu sehen ist, befindet sich der erste Dichtschenkel 6 des Dichtprofils 1 samt seiner Dichtlippen 7 und 8 zwischen dem unteren Randbereich 4 des oberen PV-Moduls 2 und dem oberen Randbereich 5 des unteren PV-Moduls 3. Dabei liegen die Dichtlippen 8 in elastisch verformtem Zustand an der Oberseite des oberen Randbereichs 5 und die Dichtlippen 7 in elastisch verformtem Zustand an der Unterseite des unteren Randbereichs 4 an. Der Spalt zwischen dem unteren Randbereich 4 des oberen PV-Moduls 2 und dem oberen Randbereich 5 des unteren PV-Moduls 3 wird dadurch wirksam abgedichtet. Selbst wenn wider Erwarten geringe Mengen Regenwasser die von dem Dichtschenkel 6 bewirkte Dichtwirkung überwinden würden, so würde das Regenwasser in den Auffangkanal 12 gelangen und dort später bei Erwärmung insbesondere der PV-Module 2 und 3 verdunsten.

In Fig. 7 ist außerdem zu erkennen, dass der untere Randbereich 4 mit mehr als der Hälfte seiner gesamten Breite nach rechts unten über den Dichtschenkel 6 hinausragt. Dies bewirkt, dass nur in Ausnahmefällen Regenwasser durch Wind oder Adhäsionskräfte derart von rechts unten in den Spalt zwischen dem unteren Randbereich 4 und dem oberen Randbereich 5 gedrängt wird, dass es mit dem Dichtschenkel 6 und seinen Dichtlippen 7 bzw. 8 in Kontakt kommt.

Die Abdichtung der Überlappungsbereiche zwischen oberen und unteren PV-Modulen der erfindungsgemäßen Dachhautanordnung lässt sich schnell und auf einfache Weise herstellen. In dem Überlappungsbereich, in welchem der untere Randbereich 4 den oberen Randbereich 5 überlappt, sind nach dem Aufstecken des Dichtprofils 1 auf den oberen Randbereich 5 keine Montageschritte erforderlich, die den unteren Randbereich 4 mit dem oberen Randbereich 5 formschlüssig verbinden. Die formschlüssige Verbindung der PV-Module 2, 3 bzw. 2', 3' mit der Unterkonstruktion für die Dachhautanordnung erfolgt ausschließlich entlang ihrer Seitenrandbereiche 24, 13 bzw. 19', 25' mit Hilfe von Montageschienen. In dem Überlappungsbereich der oberen und unteren PV-Module 2, 3 bzw. 2', 3' ist lediglich das Dichtprofil 1 bzw. das Dichtprofil 1' auf den oberen Randbereich 5 bzw. 5' des unteren PV-Moduls 3 bzw. 3' aufzustecken.

Der in Fig. 8 dargestellte Schnitt E-E aus Fig. 6 verläuft genau durch den in Fig. 3 zu sehenden Zwischenraum zwischen dem PV-Modul 3 und dem PV-Modul 3' bzw. durch den Zwischenraum zwischen dem PV-Modul 2 und dem PV-Modul 2', der in der oberen Hälfte der Fig. 6 zwischen dem rechten Randbereich 24 des linken PV-Moduls 2 und dem linken Randbereich 25' des rechten PV-Moduls 2' zu erkennen ist.

Die Fig. 9, 10 und 11 zeigen den Fig. 6, 7 und 8 entsprechende Ansichten, wobei zusätzlich eine längliche Montageschiene 29 dargestellt ist, die wie die Montageschiene 21 aus Aluminium bestehen kann. Die Montageschiene 29 ist mit Hilfe von Spenglerschrauben 30, von denen in Fig. 9 nur eine gezeigt ist, mit dem Element 27 der die Dachhautanordnung abstützenden Unterkonstruktion verschraubt und befestigt dadurch den rechten Seitenrandbereich 24 des PV-Moduls 2 sowie den linken Seitenrandbereich 25` des PV-Moduls 2' formschlüssig an der Unterkonstruktion.

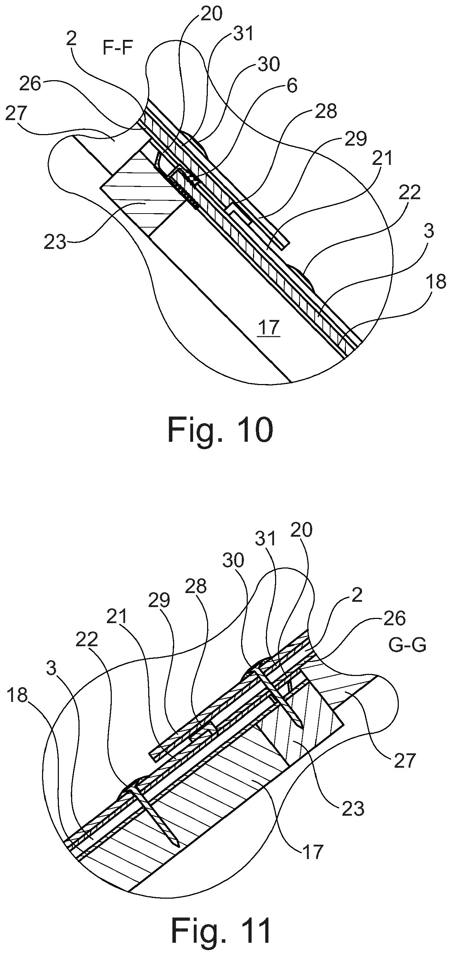

Wie in der den Schnitt F-F aus Fig. 9 darstellenden Fig. 10 und der den Schnitt G-G aus Fig. 9 darstellenden Fig. 11 zu sehen ist, überlappt die obere Montageschiene 29 mit ihrem unteren Ende das obere Ende der unteren Montageschiene 21. Zwischen der Montageschiene 29 einerseits und dem rechten Seitenrandbereich 24 des PV-Moduls 2 sowie dem linken Seitenrandbereich 25`des PV-Moduls 2' befindet sich ein länglicher Schienengummi 31, der wie der Schienengummi 20 beispielsweise aus EPDM bestehen kann.

### BEZUGSZEICHENLISTE

- 1: Dichtprofil
- 1': Dichtprofil
- 2: Oberes PV-Modul
- 2`: Oberes PV-Modul
- 3: Unteres PV-Modul
- 3`: Unteres PV-Modul
- 4: Unterer Randbereich des oberen PV-Moduls 2
- 4': Unterer Randbereich des oberen PV-Moduls 2`
- 5: Oberer Randbereich des unteren PV-Moduls 3
- 5': Oberer Randbereich des unteren PV-Moduls 3'
- 6: Erster Dichtschenkel
- 7: Erste Dichtlippen des ersten Dichtschenkels 6
- 8: Zweite Dichtlippen des ersten Dichtschenkels 6
- 9: Zweiter Dichtschenkel
- 10: Dritte Dichtlippen des zweiten Dichtschenkels 9
- 11: Verbindungssteg
- 12: Auffangkanal
- 13: Rechter Seitenrandbereich des PV-Moduls 3
- 14: Hohlraum des Dichtprofils 1
- 15: Kanalbodenwand des Auffangkanals 12
- 16: Kanalseitenwand des Auffangkanals 12
- 17: Element der Unterkonstruktion
- 18: Auflagegummi
- 19': Linker Seitenrandbereich des PV-Moduls 3'
- 20: Schienengummi
- 21: Montageschiene
- 22: Spenglerschraube
- 23: Element der Unterkonstruktion
- 24: Rechter Seitenrandbereich des PV-Moduls 2
- 25': Linker Seitenrandbereich des PV-Moduls 2'
- 26: Auflagegummi
- 27: Element der Unterkonstruktion
- 28: Kantenschutzprofil
- 29: Montageschiene
- 30: Spenglerschraube
- 31: Schienengummi
- LE: Längsebene des ersten Dichtschenkels 6
- L₁: Länge des ersten Dichtschenkels 6
- L₂: Länge des zweiten Dichtschenkels 9
- ZL: Zahnlängsachse der dritten Dichtlippen 10

## Patentansprüche

1. Dichtprofil (1) zum Abdichten eines Überlappungsbereiches zweier Dachhaut-Photovoltaik-Module (2, 3), in welchem ein unterer Randbereich (4) eines oberen Dachhaut-Photovoltaik-Moduls (2) einen oberen Randbereich (5) eines unteren Dachhaut-Photovoltaik-Moduls (3) schuppenartig überlappt, wobei das Dichtprofil (1) aus wenigstens einem elastischen Gummi hergestellt ist, **dadurch gekennzeichnet, dass**
das Dichtprofil (1)
• einen ersten Dichtschenkel (6) zum Anordnen zwischen dem unteren (4) und dem oberen (5) Randbereich,
• einen zweiten Dichtschenkel (9) zum Anordnen unterhalb des oberen Randbereichs (5), und
• einen Verbindungssteg (11), der den ersten Dichtschenkel (6) mit dem zweiten Dichtschenkel (9) verbindet,
umfasst.

2. Dichtprofil (1) nach Anspruch 1,
**dadurch gekennzeichnet, dass**
das Dichtprofil (1) einstückig aus einem einzigen elastischen Gummi hergestellt ist.

3. Dichtprofil (1) nach Anspruch 1 oder 2,
**dadurch gekennzeichnet, dass**
das Dichtprofil (1) einen Auffangkanal (12) zum Auffangen von Kondenswasser aufweist, das sich an einer Unterseite des oberen Dachhaut-Photovoltaik-Moduls (2) niederschlägt.

4. Dichtprofil (1) nach einem der vorangehenden Ansprüche,
**dadurch gekennzeichnet, dass**
der erste Dichtschenkel (6) wenigstens eine erste Dichtlippe (7) aufweist, die in einem in den Überlappungsbereich eingebautem Zustand des Dichtprofils (1) in Richtung des unteren Randbereichs (4) hervorsteht und an diesem anliegt.

5. Dichtprofil (1) nach einem der vorangehenden Ansprüche,
**dadurch gekennzeichnet, dass**
der erste Dichtschenkel (6) wenigstens eine zweite Dichtlippe (8) aufweist, die in einem in den Überlappungsbereich eingebautem Zustand des Dichtprofils (1) in Richtung des oberen Randbereichs (5) hervorsteht und an diesem anliegt.

6. Dichtprofil (1) nach einem der vorangehenden Ansprüche,
**dadurch gekennzeichnet, dass**
der zweite Dichtschenkel (9) wenigstens eine dritte Dichtlippe (10) aufweist, die in einem in den Überlappungsbereich eingebautem Zustand des Dichtprofils (1) in Richtung des oberen Randbereichs (5) hervorsteht und an diesem anliegt.

7. Dichtprofil (1) nach einem der vorangehenden Ansprüche,
**dadurch gekennzeichnet, dass**
der erste Dichtschenkel (6) zwei oder mehr erste Dichtlippen (7) und/oder zwei oder mehr zweite Dichtlippen (8) aufweist.

8. Dichtprofil (1) nach Anspruch 7,
**dadurch gekennzeichnet, dass**
sich die ersten Dichtlippen (7) und/oder die zweiten Dichtlippen (8) im Querschnitt relativ zu einer Längsebene (LE) des ersten Dichtschenkels (6) und in einer von dem Verbindungssteg (11) abgewandten Richtung geneigt erstrecken.

9. Dichtprofil (1) nach Anspruch 7 oder 8,
**dadurch gekennzeichnet, dass**
die ersten Dichtlippen (7) und die zweiten Dichtlippen (8) im Querschnitt relativ zu einer Längsebene (LE) des ersten Dichtschenkels (6) symmetrisch angeordnet sind.

10. Dichtprofil (1) nach einem der vorangehenden Ansprüche,
**dadurch gekennzeichnet, dass**
der zweite Dichtschenkel (9) zwei oder mehr dritte Dichtlippen (10) aufweist.

11. Dichtprofil (1) nach Anspruch 10,
**dadurch gekennzeichnet, dass**
die dritten Dichtlippen (10) im Querschnitt als Dichtzähne mit jeweils einer Zahnlängsachse (ZL) ausgebildet sind, die rechtwinklig auf dem zweiten Dichtschenkel (9) steht.

12. Dichtprofil (1) nach einem der vorangehenden Ansprüche,
**dadurch gekennzeichnet, dass**
der Verbindungssteg (11) als Anschlag für eine obere Stirnseite des unteren Dachhaut-Photovoltaik-Moduls (3) ausgebildet ist.

13. Dichtprofil (1) nach einem der vorangehenden Ansprüche,
**dadurch gekennzeichnet, dass**
im Querschnitt der zweite Dichtschenkel (9) eine zweite Länge (L₂) aufweist, die größer ist als eine erste Länge (L₁) des ersten Dichtschenkels (6).

14. Dachhautanordnung umfassend wenigstens ein oberes Dachhaut-Photovoltaik-Modul (2) und wenigstens ein unteres Dachhaut-Photovoltaik-Modul (3),
• wobei die beiden Dachhaut-Photovoltaik-Module (2, 3) einen Überlappungsbereich aufweisen, in welchem ein unterer Randbereich (4) des oberen Dachhaut-Photovoltaik-Moduls (2) einen oberen Randbereich (5) des unteren Dachhaut-Photovoltaik-Moduls (3) schuppenartig überlappt, und
• wobei jedes der beiden Dachhaut-Photovoltaik-Module (2, 3) einen linken und einen rechten (24, 13) Seitenrandbereich aufweist, die relativ zu einer Horizontalebene geneigt verlaufen,
**dadurch gekennzeichnet, dass**
in dem Überlappungsbereich ein Dichtprofil (1) nach einem der vorangehenden Ansprüche derart angeordnet ist, dass
• das Dichtprofil (1) so auf den oberen Randbereich (5) des unteren Dachhaut-Photovoltaik-Moduls (3) aufgesteckt ist, dass zumindest ein Teil des oberen Randbereichs (5) zwischen dem ersten Dichtschenkel (6) und dem zweiten Dichtschenkel (9) aufgenommen ist,
• zumindest ein Teil des unteren Randbereichs (4) des oberen Dachhaut-Photovoltaik-Moduls (2) lose auf dem ersten Dichtschenkel (6) aufliegt und
• zumindest ein Teil des zweiten Dichtschenkels (9) lose auf eine Dach-Unterkonstruktion (23) auflegbar ist,
wobei die beiden Dachhaut-Photovoltaik-Module (2, 3) ausschließlich entlang ihrer linken und rechten (24, 13) Seitenrandbereiche formschlüssig an der Dach-Unterkonstruktion befestigbar sind.

## Geänderte Patentansprüche

### Geänderte Patentansprüche gemäss Regel 137(2) EPÜ.

1. Dachhautanordnung umfassend wenigstens ein oberes Dachhaut-Photovoltaik-Modul (2) und wenigstens ein unteres Dachhaut-Photovoltaik-Modul (3),
• wobei die beiden Dachhaut-Photovoltaik-Module (2, 3) einen Überlappungsbereich aufweisen, in welchem ein unterer Randbereich (4) des oberen Dachhaut-Photovoltaik-Moduls (2) einen oberen Randbereich (5) des unteren Dachhaut-Photovoltaik-Moduls (3) schuppenartig überlappt,
• wobei jedes der beiden Dachhaut-Photovoltaik-Module (2, 3) einen linken und einen rechten (24, 13) Seitenrandbereich aufweist, die relativ zu einer Horizontalebene geneigt verlaufen, und
• wobei in dem Überlappungsbereich ein aus wenigstens einem elastischen Gummi hergestelltes Dichtprofil (1) umfassend
• einen ersten Dichtschenkel (6) zum Anordnen zwischen dem unteren (4) und dem oberen (5) Randbereich,
• einen zweiten Dichtschenkel (9) zum Anordnen unterhalb des oberen Randbereichs (5), und
• einen Verbindungssteg (11), der den ersten Dichtschenkel (6) mit dem zweiten Dichtschenkel (9) verbindet,
derart angeordnet ist, dass das Dichtprofil (1) so auf den oberen Randbereich (5) des unteren Dachhaut-Photovoltaik-Moduls (3) aufgesteckt ist, dass zumindest ein Teil des oberen Randbereichs (5) zwischen dem ersten Dichtschenkel (6) und dem zweiten Dichtschenkel (9) aufgenommen ist, **dadurch gekennzeichnet, dass**
• zumindest ein Teil des unteren Randbereichs (4) des oberen Dachhaut-Photovoltaik-Moduls (2) lose auf dem ersten Dichtschenkel (6) aufliegt und
• zumindest ein Teil des zweiten Dichtschenkels (9) lose auf eine Dach-Unterkonstruktion (23) auflegbar ist,
wobei die beiden Dachhaut-Photovoltaik-Module (2, 3) ausschließlich entlang ihrer linken und rechten (24, 13) Seitenrandbereiche formschlüssig an der Dach-Unterkonstruktion befestigbar sind.

2. Dachhautanordnung nach Anspruch 1,
**dadurch gekennzeichnet, dass**
das Dichtprofil (1) einstückig aus einem einzigen elastischen Gummi hergestellt ist.

3. Dachhautanordnung nach Anspruch 1 oder 2,
**dadurch gekennzeichnet, dass**
das Dichtprofil (1) einen Auffangkanal (12) zum Auffangen von Kondenswasser aufweist, das sich an einer Unterseite des oberen Dachhaut-Photovoltaik-Moduls (2) niederschlägt.

4. Dachhautanordnung nach einem der vorangehenden Ansprüche,
**dadurch gekennzeichnet, dass**
der erste Dichtschenkel (6) wenigstens eine erste Dichtlippe (7) aufweist, die in Richtung des unteren Randbereichs (4) hervorsteht und an diesem anliegt.

5. Dachhautanordnung nach einem der vorangehenden Ansprüche,
**dadurch gekennzeichnet, dass**
der erste Dichtschenkel (6) wenigstens eine zweite Dichtlippe (8) aufweist, die in Richtung des oberen Randbereichs (5) hervorsteht und an diesem anliegt.

6. Dachhautanordnung nach einem der vorangehenden Ansprüche,
**dadurch gekennzeichnet, dass**
der zweite Dichtschenkel (9) wenigstens eine dritte Dichtlippe (10) aufweist, die in Richtung des oberen Randbereichs (5) hervorsteht und an diesem anliegt.

7. Dachhautanordnung nach einem der vorangehenden Ansprüche,
**dadurch gekennzeichnet, dass**
der erste Dichtschenkel (6) zwei oder mehr erste Dichtlippen (7) und/oder zwei oder mehr zweite Dichtlippen (8) aufweist.

8. Dachhautanordnung nach Anspruch 7,
**dadurch gekennzeichnet, dass**
sich die ersten Dichtlippen (7) und/oder die zweiten Dichtlippen (8) im Querschnitt relativ zu einer Längsebene (LE) des ersten Dichtschenkels (6) und in einer von dem Verbindungssteg (11) abgewandten Richtung geneigt erstrecken.

9. Dachhautanordnung nach Anspruch 7 oder 8,
**dadurch gekennzeichnet, dass**
die ersten Dichtlippen (7) und die zweiten Dichtlippen (8) im Querschnitt relativ zu einer Längsebene (LE) des ersten Dichtschenkels (6) symmetrisch angeordnet sind.

10. Dachhautanordnung nach einem der vorangehenden Ansprüche,
**dadurch gekennzeichnet, dass**
der zweite Dichtschenkel (9) zwei oder mehr dritte Dichtlippen (10) aufweist.

11. Dachhautanordnung nach Anspruch 10,
**dadurch gekennzeichnet, dass**
die dritten Dichtlippen (10) im Querschnitt als Dichtzähne mit jeweils einer Zahnlängsachse (ZL) ausgebildet sind, die rechtwinklig auf dem zweiten Dichtschenkel (9) steht.

12. Dachhautanordnung nach einem der vorangehenden Ansprüche,
**dadurch gekennzeichnet, dass**
der Verbindungssteg (11) als Anschlag für eine obere Stirnseite des unteren Dachhaut-Photovoltaik-Moduls (3) ausgebildet ist.

13. Dachhautanordnung nach einem der vorangehenden Ansprüche,
**dadurch gekennzeichnet, dass**
im Querschnitt der zweite Dichtschenkel (9) eine zweite Länge (L₂) aufweist, die größer ist als eine erste Länge (L₁) des ersten Dichtschenkels (6).
